# EUROPEAN PATENT APPLICATION

(11) **EP 2 602 979 A1**
(43) Date of publication of application: **12.06.2013**
(21) Application number: 11192686.1
(22) Date of filing: 08.12.2011
(51) Int. Cl.: H04M 1/725

(54) **Apparatus, and associated method, for temporarily limiting operability of user-interface portion of communication device**

(71) Applicant: Research In Motion Limited, Waterloo, ON N2L 3W8 (CA)
(72) Inventor: Hole, David Phillip, Southampton, Hampshire SO52 9NP (GB); Bender, Michael John, Waterloo, Ontario N2L 3W8 (CA)
(74) Representative: Bryn-Jacobsen, Caelia

(57) **Abstract**

An apparatus, and an associated method, disables the functionality of a portion of a user interface of a communication device, such as a wireless device e.g. mobile telephone, for a limited period (from a fraction of a second up to 2 seconds). A detector detects an alert, such as an incoming call. Responsive to the detection, a portion of the user interface is disabled by a disabler e.g. the call accept or reject button are disabled. Disabling of the portion of the user interface is for a limited period and prevents a user of the device from inadvertently rejecting, or accepting the incoming call until the limited period expires.
Avoids erroneous input when a mobile phone user is for example texting and then receives an incoming call but blocking some keys of the user interface analogous to blocking the key pad when a phone is idle.

## Description

The present disclosure relates generally to mobile communications, and more particularly, to an electronic device, such as a wireless device configured to limit the operability of a portion of a user interface of the device responsive to an event generated at the device.

### Background

The capabilities of mobile communications devices such as smart phones, tablets and other network access devices have dramatically increased in recent years. Such devices are now truly multi-functional and are provided with user interfaces that enable a user to multi-task using a variety of applications including email, texting/messaging, web browsing, and telephonic communications, among others.

In this regard, a problem sometimes occurs when the user is interacting with the user interface pursuant to a first functionality while a second functionality becomes active. For instance, the user might be engaged in texting when a telephone call is concurrently received by the device. When the call invokes telephonic functionality at the device, it necessitates some interaction by the user by way of the user interface. Typically, in the example of a telephone call, the user of the device is typically prompted to accept or reject the call via the user interface.

If the user is concentrating on the texting application at this time, the sudden need to interact with the user interface pursuant to the incoming call may cause an input at the user interface that is contrary to his or her actual intent. For example, the user might accidently reject the incoming call when the actual intent was to accept the call or vice versa. The possibility of an inadvertent entry of an erroneous input detracts from the overall user experience and perception of the device.

### Brief Description of the Drawings

Figure 1 illustrates a functional block diagram of a communication system in which an implementation of the present disclosure is embodied.

Figure 2 illustrates a functional block diagram of a portion of a communication device of an implementation of the present disclosure.

Figure 3 illustrates a functional block diagram of an electronic assembly of an implementation of the present disclosure.

Figure 4 illustrates a process diagram representative of the process of operation of an implementation of the present disclosure.

Figure 5-8 illustrate a timing relations representative of exemplary implementations of the present disclosure.

Figure 9 illustrates a method flow diagram representative of the method of operation of an implementation of the present disclosure.

### Detailed Description

The present disclosure advantageously provides an apparatus and an associated method which limits operability of a portion of a user interface of an electronic device responsive to generation of an event.

In accordance with an aspect of the present disclosure, the operability of a selected functionality, such as for example, communication-reject or communication-accept functionality, is limited for a specified period subsequent to generation of the event.

In accordance with one aspect of the present disclosure, the electronic device includes a user interface and responsive to generation of the alert or other event, a portion of the user interface is disabled or has its operability limited for a specified period.

By limiting the operability of a portion of the user-interface, the user of the device is prevented from inadvertently entering a command that is potentially contrary to his or her actual intent.

Selection of whether to disable a portion of the user interface, and for the length of the period during which the portion of the user interface is disabled, is dependent upon any of various factors. One factor pertains to whether the user is operating the device pursuant to another function when the alert is generated. Another factor pertains to the recency of inputs entered by the user by way of the user interface. Another factor pertains to whether use of the device pursuant to the other functionality renders the portion of the user interface ambiguous. Additional, or other, factors are also utilized in other implementations.

For instance, when the device comprises a wireless device, such as a smart phone and the event comprises an alert indicating a terminating phone call, the call-reject functionality of the user interface is disabled for a brief period. The duration of the brief period, in one implementation, is dependent upon user operation of the device just-prior to the generation of the alert or other event.

Also, for instance, when the user is operating the device to initiate an outgoing call or communication and a terminating communication arrives at the device, an alert is generated responsive to the terminating communication and the call-accept functionality of the user interface is disabled for a brief period.

In one aspect of the present disclosure, the electronic device comprises a wireless device. The limitation of the operability of the communication-reject functionality prevents a user of the device from inadvertently entering a command by way of the user interface. The user is thereby unable inadvertently to reject, the terminating communication.

In another aspect of the present disclosure, detection of generation of an alert at the communication device and enabling of a portion of the user interface associated with user response to user perception of the alert delays the enabling of the user-interface portion.

In another aspect of the present disclosure, a call placed by a calling party is routed to a terminating device, such as a wireless device, pursuant to call initiation and connection procedures used in the communication network in which the terminating device is operable. Call signaling includes signaling forming a call notification that alerts the terminating device of the incoming, terminating call. When detected at the wireless device the call notification causes the generation of an alert. That is to say, the call notification triggers an alert or event. The alert, once generated, is annunciated in human-perceptible form, such as by generation of a ringtone.

In another aspect of the present disclosure, a detector detects the alert generation that alerts the terminating device of the terminating communication. The alert generation is evidenced to a user by generation of, e.g., a ringtone or other human-perceptible indicia of the alert. The ringtone or other alert indicia is generated, typically, substantially concurrently with the generation of the alert. Viz., the ringtone or other alert indicia and alert generation occurs essentially simultaneously, immediately in response to the alert generation.

In another aspect of the present disclosure, the terminating call or other communication comprises a circuit-switched call. And, in another aspect of the present disclosure, the terminating call comprises a packet-switched call or other communication.

In another aspect of the present disclosure, responsive to detection of the alert, such as an alert that alerts a terminating call or other communication or an alert that is generated responsive to another trigger, the operability of a portion of a user interface of the terminating device is limited for a selected period. The limitation of the operability of the portion of the user interface is, e.g., carried out automatically responsive to detection of the generation of the alert. In one implementation, the limitation of the operability is further dependent upon functions being carried out at the device in time proximity to the alert. If a function is being carried out, and the function utilizes a portion of the user interface that renders the portion ambiguous, that is, used during operation of the function and also responsive to the alert, then the portion of the user interface is caused to be of limited operability. If, conversely, the portion of the user interface is unambiguous, then the limitation of the operability of the portion of the user interface is for a reduced period or is not imposed.

In another aspect of the present disclosure, the user interface includes a call-reject feature. The call-reject feature is implemented, for example, as an input key or icon that is actuated by the user of the terminating device to reject a terminating call or communication or as a touching motion on a touch-screen. Or, the call-reject feature requires that more than one operation be carried out by a user of the terminating device to reject the terminating call or communication. One or more of the elements of the user interface, in such an implementation, is caused to be of limited operability so that the call-reject feature is inoperable for a limited time period.

In another aspect of the present disclosure, the user interface includes a call-accept feature. The call-accept feature is implemented, for example, as an input key or icon that is actuated by the user of the device to accept a terminating call or communication or as a touching motion on a touch-screen. Or, the call-accept feature requires that more than one operation be carried out by a user of the device to accept the terminating call or communication. One or more of the elements of the user interface, in such an implementation, is caused to be of limited operability so that the call-accept feature is inoperable for a limited time period.

In another aspect of the present disclosure, the limitation of the operability of the portion of the user interface is for a limited period. The limited period commences subsequent to detection of the alert. The length of the limited period is great enough to reduce the possibility of a user of the communication device of inadvertently rejecting, or of inadvertently accepting, a terminating communication without intent to do so. The limited period is, for example, of a one-second or two-second length or may be shorter (such as a few hundred milliseconds). The limited period is, for example, of a variable length, dependent upon prior activity at the communication device, such as call initiation, or other, operations, just prior to detection of the terminating communication. Preferably, the limited period is of a duration which, taking into account human reaction times, avoids with high probability the user's intentions being misinterpreted because the user was not able to react and stop himself from performing the step or steps (e.g. pressing a button) corresponding to the, e.g., call reject functionality. Subsequent to the limited period, the portion of the user interface is enabled, thereby separating in time the alert generation and the enabling of the user-interface portion.

In another aspect of the present disclosure, the length of the period during which the portion of the user interface is of limited operability is a selectable parameter, selectable to be of any length within a range of allowable lengths. By providing selectability to the length of the period of limited operability, selection can be made to individualize length of the period to a length that best fits the needs of a user of the device. Selectability of the length of the period is, for example selected pursuant to selection of an operating parameter provided in an options menu of the terminating device. Or, selectability is dependent upon user input within a selected period prior to commencement of the period.

In another aspect of the present disclosure, the communication device includes a display element. The display element forms, e.g., part of the user interface. Responsive to the detection of the alert and resultant limitation of the operability of the portion of the user interface for the limited period, a display generator causes generation of a display to indicate the limitation of the operability of the portion of the user interface.

In another aspect of the present disclosure, when the user-interface portion is used for more than one purpose, the limitation of the operability extends only to the purpose for which the portion is related to the alert. The user-interface portion remains operable for other purposes.

In another aspect of the present disclosure, the display caused to be generated comprises, for instance, an icon that is displayed upon a portion of the screen display. The indication of the limitation of the operability of the portion of the user interface is alternatively provided in another manner, such as by an audio or mechanical indication. Additionally or alternatively, if a user attempts to actuate the portion of the user interface whose operability is limited, an indication is provided at the user interface of detection of the actuation attempt.

In another aspect of the present disclosure, a duration indication, such as time remaining of the period of limited operability is displayed together with the icon. The time-remaining indication provides additional alert to a user of the communication device of the limitation of the user-interface portion along with the duration of such disabling.

Thereby, a manner is provided to reduce the possibility that a user of the communication device unintentionally enters an input, such as an input to accept or to reject a terminating communication at the device. By limiting the operability of the portion of the user interface for a temporary period, the possibility of the user inadvertently making an improper selection related to an incoming communication is reduced while also permitting the user to make a selection regarding the incoming communication after a brief delay, if the user elects to accept or, respectively, reject the incoming communication.

In these and other aspects, an apparatus, and an associated method, is provided for an electronic device that has a user interface. A detector is configured to detect an event or alert at the electronic device. And, an operability limiter is configured to limit the operability of a portion of the user interface for a selected period responsive to detection by detector of the event or alert. In these and further aspects, a wireless device, and an associated method is provided. A processor is configured to limit operability of a portion of a user interface for a selected period in response to an event generated on a wireless device.

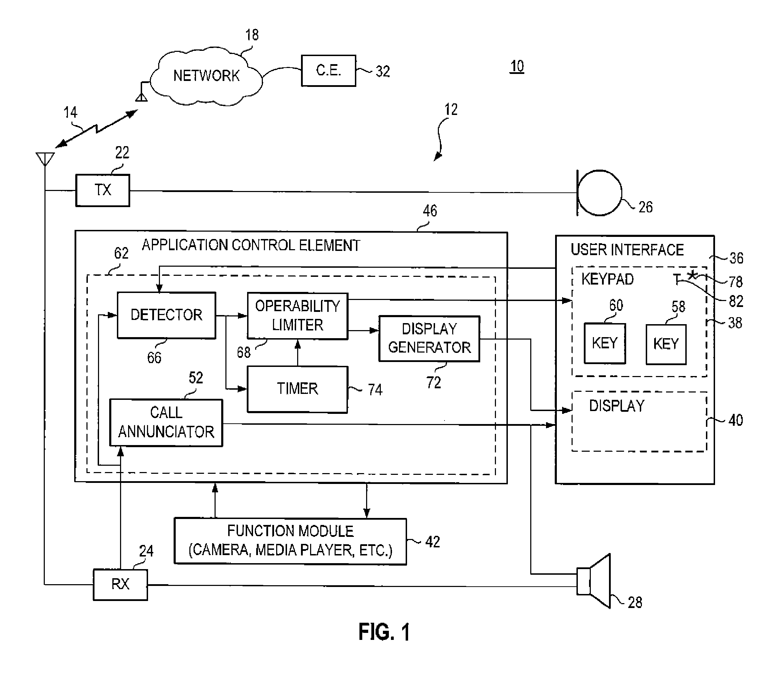

Referring first, therefore, to Figure 1, a communication system 10 provides for communications with wireless devices of which the wireless device 12 is representative. In the exemplary il lustration of Figure 1, the communication system 10 forms a radio communication system. Radio channels 14 are defined upon a radio air interface extending between a network part 18 of the communication system and the wireless device 12. The communication system 10 is representative of any of various communication systems, for example, a cellular communication system, a wireless local network (WLAN), or another radio communication system that utilizes radio channels along at least a portion of communication paths extending between parties to a communication session. The communication system 10 is also representative of other types of communication systems, including wireline communication systems with appropriate alteration of the elements of the communication system and of the channels that are used pursuant during communication operations.

In the exemplary implementation in which the communication system forms a radio communication system and the device 12 forms a wireless device, the device 12 includes radio transceiver circuitry, which includes a transmitter (Tx) 22 and a receiver (Rx) 24. A microphone 26 is coupled to the transmitter 22, and a speaker 28 is coupled to the receiver 24. During operation, information transmitted by the transmitter, e.g., speech information transduced into electrical form by the microphone 26 is caused to be transmitted upon radio channels 14 and delivered to the communication network 18. The information is routed through the communication network 18 and delivered to a communication endpoint (CE) 32. The communication endpoint 32 is representative of any communication device to which information can be communicated when placed in communication connectivity, directly or indirectly, with the communication network. And, information sourced at the communication endpoint 32, or elsewhere, which is to be terminated at the device 12, is routed through the network 18, communicated upon radio channels 14, delivered to the device 12, and detected by the receiver 24 thereof. The information is, e.g., transduced into acoustic form by the speaker 28. Information received at device 12 may be conveyed to the user additionally or alternatively by means of a display 40. Information generated at the device 12 is caused, e.g., to be encoded and transmitted to the communication endpoint 32 and may include video or images as captured by a camera (not shown). Communication with the communication endpoint 32 may be bi-directional (e.g, telephone call, video chat, instant messaging) or unidirectional (e.g. video streaming etc.).

The device 12 includes a user interface 36 that provides for input of information by a user of the device 12, here by way of an actuator keypad 38. In the exemplary implementation, the user interface also includes a display element 40 that is capable of displaying information generated pursuant to operation of the device 12. The user interface forms, for example, a touch-screen display in which the touch-screen provides for input of information and the display provides for display of information.

In the exemplary implementation, the device 12 includes additional functionality, here implemented by a function module 42. The module is representative of any of various functionalities, e.g., a camera functionality, a media playback functionality, a calendar functionality, etc. Functions performed by the function module 42 are typically invoked responsive to user input commands and other input information entered by way of the user interface 36 or are responsive to other control during operation of the device 12. Information formed by the function module 42, depending upon the function-type, may be provided to the user interface 36 or the speaker 28 or elsewhere.

In the functional representation of Figure 1, the module inputs and outputs are delivered by way of a control element 46. The control element comprises, e.g., a processor that executes program code. The control element is implemented in any desired manner including, for instance, by processing circuitry capable of executing program code as well as hardware circuitry implementations and firmware circuitry implementations, and combinations thereof. The control element comprises, in one implementation, a call signal processor, and a user interface controller. The user interface controller provides for generation of a human-perceptible indication of an alert and to control, and limit, functionality of portions of the user interface 36.

When used pursuant to a telephonic communication service, a user typically initiates a communication session (such as a voice or video call) through interaction with the user interface 36. The user enters, for instance, the identity of the intended, called party by way of the actuator keyboard 38. The identity of the called party is represented, for instance, by a telephone number, a URL (uniform resource locator), or other identifier. In one implementation, the device 12 includes speed-dial capability in which a reduced number of inputs are entered by a user. The user may also identify the intended called party or service by means of interaction with an application such as an address book feature, a browser, an application and the identity of the desired party/service can thus be determined, e.g., by means of a lookup function within the device, within the cellular network or from another remote source (e.g., a corporate directory). In any case, the user is able to indicate when the user elects to start a call setup procedure. In response, a signal is generated and caused to be transmitted by the transmitter 22 of the transceiver circuitry. The signal forms part of a call set-up procedure.

A call initiated elsewhere, such as at the communication endpoint 32, for termination at the device 12 is analogously generated; in addition, incoming communication sessions may be initiated without direct human interaction, such as alarms, monitoring services, call-back services, etc. Pursuant to call set-up signaling, an indication of the terminating call is provided to the device 12. Signaling received at the device 12 is detected by the receiver 24 of the transceiver circuitry. The indication of the terminating call, when detected, causes generation of an alert. The alert generation, in turn, is used to cause generation of an alert indicia, such as a ringtone, at the device 12. Alerts are also triggered at the device 12 responsive to other triggers, e.g., pursuant to other features and modules of other functionality of the device.

As mentioned previously, a user of the device 12 might be utilizing the device pursuant to an additional device functionality. Such utilization might include entry of input commands and other information by way of the user interface 36. Or, such utilization might include viewing of playback or other presentation of information at the user interface or speaker 28. The attention of the user during utilization of the device pursuant to the additional functionality might be directed towards the particular function that is being utilized, either to input information or commands or to review the displayed information. The user might be utilizing the additional functionality when the alert is generated, such as to indicate delivery of a terminating call at the device 12. When the indication of the terminating call is delivered to the device 12, in typical manner, the device 12 causes generation of an alert of the detection of, e.g., a call notification forming part of a call set-up signaling procedure used in the communication system. For example, a call notification or other set-up-related indication delivered to the receiver 24 is provided to a communication-termination alert generator, here the call annunciator 52 of the control element 46. The alert generator formed of the call annunciator 52 causes generation of an alert, and the alert generation is annunciated to a user of the device, either in the form of or both an audio alert at the speaker 28 or a video alert at the user interface 36. The user of the device 12 is alerted thereby to the terminating communication. If, as just-noted, the user of the device is utilizing another functionality of the device when the terminating communication is alerted, the user might be distracted to an extent that, even if the user desires to accept the terminating communication, the user erroneously, elects to reject the terminating communication, or vice versa. Other functionalities also cause generation of an alert. For instance, in one implementation, an alert is generated when a broadcast service becomes available, or when a message (including email, instant message, video message, voicemail, voicemail notification etc.) is received. And, the generation of the alert caused by another functionality of the device 12 is analogously annunciated to a user of the device. If the user of the device is using the device for another purpose, the user might analogously be distracted to an extent that the user enters an erroneous input, i.e., an input that does not reflect the actual intention or desire of the user. The input may, however, have been a correct input had the alert not been generated.

In the exemplary implementation, the user interface includes an element that is used to process any alert, such as to reject, silence, accept, or acknowledge the alert. The element may have an additional use or meaning in addition to processing the alert. Here, an actuation keypad 38 includes one or more actuation keys that provide for user input of information and commands. Amongst the actuation keys of the actuation keyboard is a call end or reject key 58. In one implementation, the key 58 comprises a mechanically-actuable key. In another implementation, the key forms a soft key, implemented, e.g., on a touch-screen display. A user actuates the key 58 when electing to reject, rather than to accept, a terminating communication. Another actuation key comprises a call accept key 60. The key 60, analogous to the key 58 comprises a mechanically-actuable key or a soft key. The user actuates the key 60 to accept a terminating call or communication.

When the device 12 generates an alert and the alert is annunciated, such as at the speaker 28 or at a display of the user interface, the user might be actuating keys of the keyboard pursuant to utilization of the other functionality of the device. Or, the user might be viewing audio or video associated with the other functionality. And, when the terminating communication is alerted, the user, while desiring to accept the terminating communication, might erroneously actuate the communication end or reject key 58. The user might, alternately, be initiating (or be about to initiate) an outgoing call when the terminating communication arrives. In this scenario, the user, while desiring not to accept the terminating call, might erroneously accept the communication.

To prevent this type of occurrence, the device 12 further includes an apparatus 62 of an implementation of the present disclosure. The apparatus 62 is implemented in any desired manner including, for instance, with hardware-element circuitry, firmware-element circuitry, programming code executable by processing circuitry, and combinations thereof. In the illustrated implementation, the apparatus 62 includes a detector 66, an operability limiter 68, a display generator 72, and a timer 74.

In exemplary operation, when a call notification, or other call set-up signaling, is sent to the device 12 and received at the receive part 24, the detector 66 detects delivery at the device of the signaling. The detector 66 provides an indication of the detection to the operability limiter 68. And, in response, the operability limiter limits operation of the communication end-reject key 58 for a brief period. During this period, i.e., the operability-limited period, the operation of the key 58 is disabled. The user of the device 12 is unable to reject the terminating communication by actuating the key 58 as the key 58 is disabled. The limitation of the operability of the actuation key extends only for the length of the operability-limited period. Subsequent to expiration of the operability-limited period, the key 58 is again functional. A user is thereafter able to actuate the key to reject the terminating communication. Through appropriate selection of the time-length of the operability-limited period, a user of the device is prevented from inadvertently rejecting a terminating communication while permitting the rejection to be made after expiration of the disabling period if the user elects to reject the communication. In one implementation, the period is selected to be of a duration of one or two seconds or of a fraction of a second. That is to say, the alert is responsive to the call signaling, and the operability limiter is also responsive to the call signaling.

In further exemplary operation, the detector 66 is provided with indications of user interactions with the user interface 36 relating to or potentially leading to an originating call. For example, the detector 66 may consider that if a user is viewing an entry in an address book application or a list of previous calls, or has selected, e.g., by scrolling to a phone number within an application, e.g., a web browser, then the detector may indicate that the device 12 is, or may be, being used to initiate an outgoing call. If the detector is provided with indications that the device 12 is, or may be used to initiate an outgoing call, the detector 66 provides an indication to the operability limiter 68, and the operability limiter 68 limits operation of the call accept key 60 for a brief period.

Here, the timer 74 times a selected time period commencing with the detection by the detector 66 of the alert, here an alert related to the terminating communication. When the timer times-out, an indication is provided to the operability limiter 68, and the limiter ends the limitations imposed upon the actuation key 58 or 60. In one implementation, the duration of the operability-limiter period is selectable. Here, selection is made, and an indication is provided to the timer 74. The timing period of the timer conforms, or otherwise responsive to, the selection. Selection in one implementation is dependent upon user input just prior to the commencement of the operability-limiter period.

In the exemplary implementation, the display generator 72 is provided with an indication of limitation imposed upon the key 58 or upon the key 60 by the limiter 68. The display generator generates a display for a display element of the user interface to indicate the limiting of the functionality of the keys 58 and/or 60. The display generator causes generation, e.g., of an icon 78 to indicate the limitation imposed upon the key and the identity of the key. In the exemplary implementation, the display generator further causes generation of an indication 82 of the time period remaining during which the functionality of the keys 58 and/or 60 are limited or otherwise disabled. The indication 82 is, for example, a countdown timer display. In one exemplary implementation, further indication is provided to acknowledge to the user of the entry of a command at the key 58 and/or key 60. For instance, a 'dimmed-out' hang up button is displayed. Or, muted, or reduced-volume, ringtones are generated. In one implementation, a user is permitted to override the operability limitation through appropriate override input, e.g., repeatedly actuating an input actuator or activating the input actuator for a selected time period.

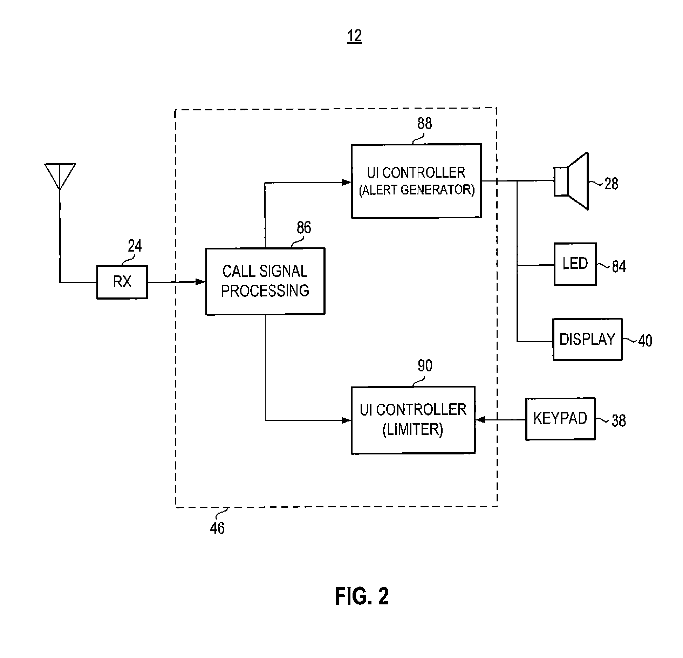

Figure 2 illustrates a representation of a portion of the communication device 12 pursuant to an implementation of the present disclosure. The communication device is again shown to include the receiver 24, the control element 46, the speaker 28, keyboard 38, display element 40, and, here, also, a light emitting diode (LED) 84.

Here, the control element 46 provides call signal processing, indicated by the call signal processing block 86 and user-interface control, including controller functionality 88 that causes generation of a human-perceptible indication of detection of an alert at one or more of the speaker 28, display 40, and LED 84, and controller functionality 90 that functions to limit the operability of a portion of the keypad 38.

When call signaling related to a call termination is received at the receiver 24, call-signaling information is provided to the call signal processing functionality 86. The call signal processing functionality 86 forms an alert that causes the controller functionalities 88 and 90, respectively, to cause generation of a human-perceptible indication of the alert and to limit operability of a selected portion of the keypad 38.

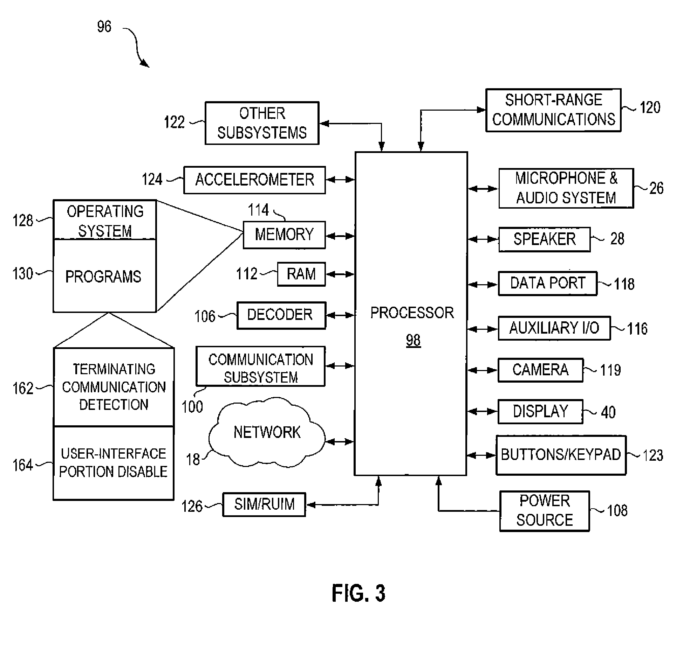

Figure 3 illustrates a representation of an electronic assembly 96 of a wireless device, such as the wireless device 12 shown in Figure 1. The electronic assembly 96 includes multiple components, including a processor 98 that controls overall operation of the wireless device. In various embodiments, functions provided by a wireless device include voice, data, and command communications, which are implemented by a communication subsystem 100. The communication subsystem 100 is used, e.g., to initiate and to support an active voice call or data communication session. The communication subsystem 100 is comprised of any of various combinations of hardware, software, and firmware to perform various designated functions. The software is functionally or conceptually divided into software modules. Software in one module is able to share or to call upon functions of another module.

Data received by a device at which the electronic assembly is implemented can be processed, including decompression and decrypting operations, by a decoder 106. The communication subsystem 100 receives messages from, and sends messages to, the network 18. The communication subsystem 100 facilitates initiation and operation of an active call when the device at which the electronic assembly is implemented is in a real-time, voice communication session. The network 18 is of any various types of networks including, for example, a cellular network, a wireless data network, a wireless voice network, and a network that supports both voice and data communications. The network 18 uses any of a variety of formats, protocols, or standards such as standards including the global system for mobile communications (GSM), code division multiple access (CDMA), wireless local area networks (such as in accordance with Institute of Electrical and Electronics Engineers Standard 802.11), and other analogous standards and wireless networking protocols.

A power source 108 provides operative power to operate or to charge the electronic assembly and is implemented with one or more rechargeable batteries or a port to an external power supply.

The processor 98 interacts with additional components, here including a random access memory (RAM) 112 a memory 114, the display element 40, an auxiliary input/output (i/o) subsystem 116, a data port 118, the speaker 28, the microphone 26, together with an associated audio system, a camera module 119, a short-range communication subsystem 120, and other subsystems 122. A user of a device in which the electronic assembly 96 is implemented is able to enter data and to operate functions of the device with a data input device coupled to the processor 98. The data input device here includes buttons or a keypad 123 or a graphical user interface produced at the display element 40 in which touches and gestures are detected by a touch-sensitive overlay of the display element 40. The processor 98 interacts with the buttons or keypad or with the touch-sensitive overlay of the display element 40 by way of an electronic controller, which is represented by the other subsystem 122. As part of the user interface, information, such as text, characters, symbols, images, icons, and other items that are rendered are displayable at the display element 40. The processor 98 further interacts with an accelerometer 124 that detects a direction of gravitation forces or user-input acceleration forces and with the decoder 106. In one implementation, the accelerometer forms part of the user interface of the device. In various embodiments, the buttons and keypad 123 are used to operate select functions of the electronic assembly.

The electronic assembly 96 further includes a subscriber identity module or removable user identity module (SIM/RUIM) card 126. In an alternate implementation, identification information is programmed elsewhere, such as at the memory 114.

The electronic assembly 96 further includes an operating system 128 and software programs 130 formed of program code that define algorithms. The operating system 128 and the programs 130 are executed by the processor 98 during operation of the electronic assembly. The operating system 128 and the software programs 130 are stored, for example, at a persistent, updatable store, such as the memory 114, as illustrated. Additional applications or programs can be loaded by way of the network 18, the auxiliary i/o subsystem 116, the data port 118, the short-range communication subsystem 120, or any other subsystem 122 that is suitable for transferring program files. The software programs 130 include software modules, here including a communication activity detection module 162 and a user-interface-portion disabling module 164. The modules 162 and 164, are used to facilitate temporary disabling of a call or communication accept or reject function, or other operating limitation, of the electronic assembly. Each of the software modules can call upon various hardware and software resources of the electronic assembly 96 to execute the functionality of the respective modules. Additionally, functions described in the present disclosure are alternately, or additionally, implemented in any of various portions of the electronic assembly 96, whether the portions form software modules or specialized hardware and firmware modules. In many instances, it is possible to implement the same function in more than one portion of the assembly 96.

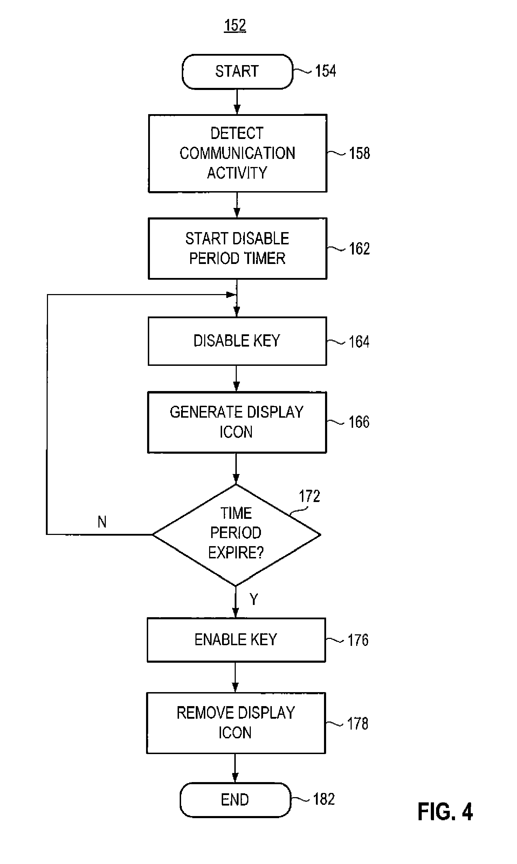

Figure 4 illustrates a process 152 of an exemplary implementation of the present disclosure. The process is performed at a communication device, such as a multi-functional, wireless device capable of telephonic communications and additional functionality. An example of such a communication device comprises the device 12 shown in Figure 1. The process provides for disabling of a portion of a user interface for a limited period subsequent to initiation of a call termination, i.e., reception of a call at the communication device.

Subsequent to entry, indicated at the start block 154, detection is made, indicated at the block 158, of communication activity, such as a terminating call or other communication or at the communication device and resultant alert generation. Then, as indicated by the block 162, a timer is started. A portion of a user interface of the communication device is caused to be of limited operability, indicated by the block 164. The portion of the user interface that is limited in operability is the portion of the user interface that is associated with a call, or other communication, rejection or a call, or other communication acceptance. A display icon is also generated, indicated at the block 166.

Then, as indicated at the decision block 172, a determination is made as to whether the time period has expired. If not, the no branch is taken back to block 164. If, conversely, the time period has expired, the yes branch is taken to the block 176. At the block 176, the portion of the user interface is again enabled, that is, returned to full operability. That is to say, the portion of the user interface associated with call-rejection, or call-acceptance, functionality is permitted to be used to cause rejection or, respectively, acceptance of a terminating communication. As indicated by the block 178, the display icon is removed. That is to say, the previously-generated display icon indicating the disabling of the portion of the user interface is no longer displayed. The process ends at the end block 182.

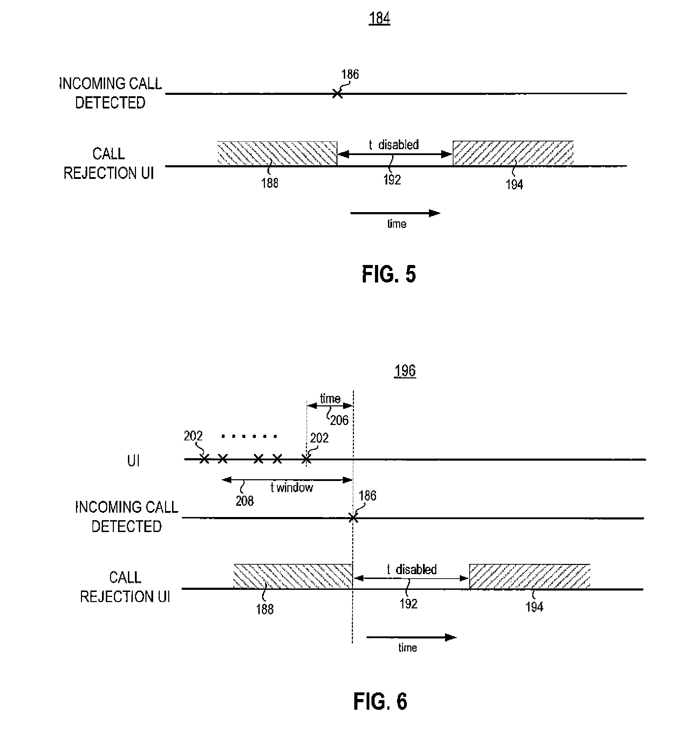

Figure 5 illustrates the relationship between generation of an alert at the communication device 12, shown in preceding figures, and the period of limited operability of a portion of the user interface pursuant to an implementation of the present disclosure. Here, an alert is generated pursuant to detection of an incoming call at the time 186. Prior to the time 186, the call-rejection user interface portion of the user inter face is operated in a non-call alert mode, indicated at period 188. Upon generation of the alert, the functionality of this user-interface feature is disabled, indicated by the t disabled period 192. During this period of limited operability, the call-reject feature of the user interface is disabled. Upon ending of the limited operability period, the call-reject user interface feature of the user interface is again operable if selected, to reject the call, indicated at the period 194.

Figure 6 illustrates a timing representation 196, here showing exemplary ongoing operations by a user with the user interface pursuant to other functionality of the device when the incoming call alert is generated, again indicated the time 186. Markings 202 indicate user input entry at the user interface. The time period t₁ 206 is a time period between a most-recent user entry at the user interface and the alert time 186. If the time period 206 is small, e.g., less than one second, the limited operability period 192 is of a selected duration, e.g., one second. If, however, the time period 206 is lengthy, e.g., greater than one second, then the period of limited operability 192 is reduced. In one implementation, the period of limited operability is reduced to zero if the time period 206 is lengthy. Generally, if the period 206 is large, then the period 192 is small. In one implementation, the duration of the limited operability period 192 is additionally, or alternately, dependent upon the rate of user inputs within a time period 208. If, for instance, large numbers of user interface events are entered, then the limited operability period 192 is reduced. In one implementation, the period 192 is two times the length of the period 208 divided by the number of input entries during the period 208.

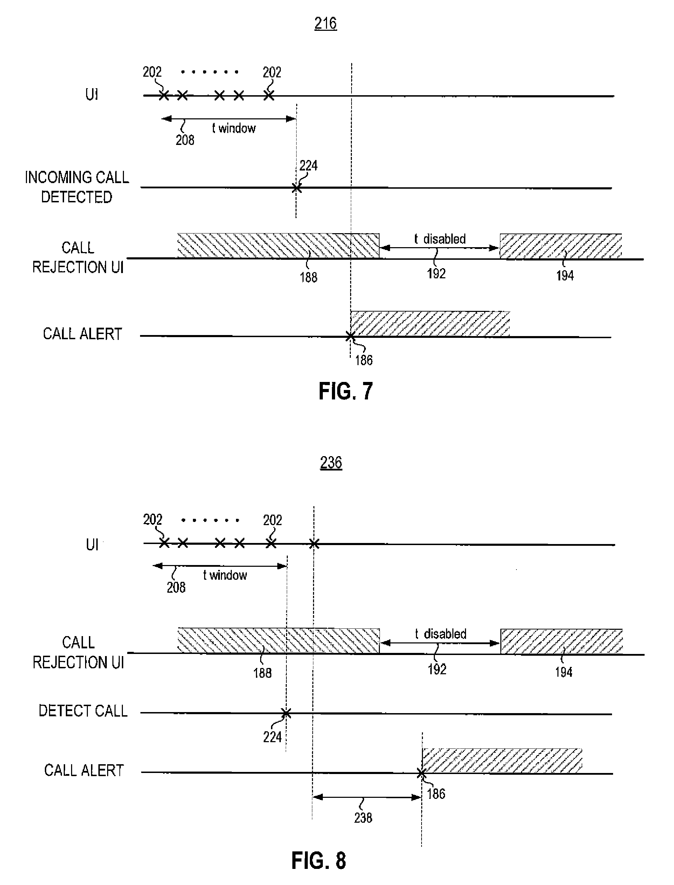

Figure 7 illustrates a representation of an example in which the inputs 202 occur at a high rate and are close in time to the time 186 at which the alert is generated. The periods 188, 192, and 194 are again shown. Additionally, here, the user interface is caused to behave in a pre-alert mode for a short period after the alert generation at time 186 responsive to detection at the time 224 of a call notification, and accounts for human reaction times and is of a length, e.g., of hundreds of milliseconds.

Figure 8 illustrates a representation 236 again showing user entry of inputs at times 202, the periods 188, 192, and 194, and generation of the alert at time 186. Here, the alert is delayed subsequent to detection at the time 224 of the call notification due to the ongoing user-interface activity indicated at the times 202. The delay of the alert generation is of a period 238. In this implementation, the delay period 238 permits a user to complete a key-entry sequence prior to generation of the alert.

In some implementations, the determination of duration of period 192 takes into account the nature of the user-interface activity 202; for example, whether the user-interface activity 202 includes the same user-interface activity that is disabled or limited during period 192.

In some implementations, the duration of period 192 (including whether or not it is actually used i.e. is non-zero) is determined in accordance with a combination of one or more considerations described above.

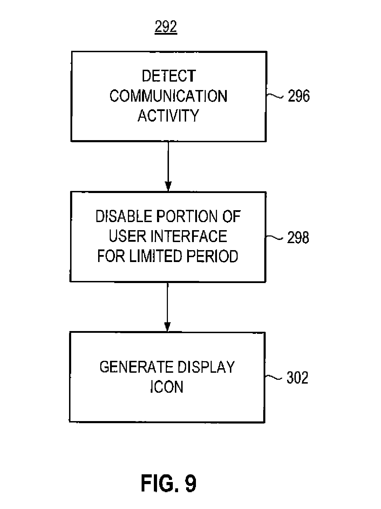

Figure 9 illustrates a method flow diagram 292 representative of the method of operation of an implementation of the present disclosure. The method is for facilitating operation a communication device having a user interface.

First, and as indicated by the block 296, detection is made of communication activity at the communication device. Then, and as indicated by the block 298, a portion of the user interface is caused to be of limited operability for a selected period responsive to detection of the terminating communication. The portion of the user interface comprises, e.g., a portion associated with entry of a terminating-communication reject command, such as a call reject command, or associated with entry of a communication accept command. As indicated by the block 302, a display is generated at a communication-device to indicate the disabling of the portion of the user interface.

Thereby, a manner is provided by which to reduce the likelihood that a user of a wireless, or other communication, device inadvertently rejects, or accepts, a terminating call or other communication. By limiting the functionality of the portion of the user interface associated with a user-entered communication command for a limited period, spontaneous or other inadvertent, user selection to reject the communication is prevented.

Presently preferred implementations of the disclosure and many improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. A wireless device comprising at least one processor configured to limit operability of a portion of a user interface for a selected period in response to an event generated on the wireless device.

2. The wireless device of claim 1 wherein said processor is configured to limit operability of a portion of the user interface in response to an event generated responsive to a change in a call condition.

3. The wireless device of claim 1 wherein said processor is further configured to enable the operability of the portion of the user interface at the end of a selected period commencing substantially concurrently with generation of the event.

4. The wireless device of claim 1 wherein the portion of the user interface enables entry of user selection of a responsive action in response to the alert.

5. The wireless device of claim 1 wherein the user interface comprises a communication reject key and wherein said processor is configured to disable operability of the communication reject key.

6. The wireless device of claim 1 wherein said processor is configured to limit operability of a portion of a user interface for a selected period responsive to entry at the user interface of originating call indicia.

7. The wireless device of claim 1 wherein the selected period is of a length dependent upon prior input entry at the user interface.

8. The wireless device of claim 1 wherein the user interface comprises a communication accept key and wherein said processor is configured to disable operability of the communication accept key.

9. A method for operating a communication device having a user interface, said method comprising:
generating an event at the communication device; and
substantially concurrently, limiting operability of a portion of the user interface for a selected period.

10. The method of claim 9, further comprising, at the end of the selected period, enabling the portion of the user interface.

11. The method of claim 9 wherein the event generated during said generating is generated in response to a wireless-device-triggered alert.

12. The method of claim 9 wherein the user interface key comprises a communication reject key and wherein said limiting operability comprises limiting operability of the communication reject key.

13. The method of claim 9 wherein said generating an event further comprises generating an indication of use of the communication device pursuant to an originating communication.

14. The method of claim 9 wherein the user interface comprises a communication accept key and wherein said limiting operability comprises limiting operability of the communication accept key.

15. The method of claim 9 wherein the selected period is of a length dependent upon performance of an additional function at the communication device.

## Amended claims

### Amended claims in accordance with Rule 137(2) EPC.

**1.** A wireless device (12), **characterized by**: at least one processor (46) configured to disable operability of a portion (58, 60) of a user interface (36) for a selected period in response to an event generated on the wireless device and configured to enable operability of said portion (58, 60) of the user interface (36) after expiration of the selected period.

**2.** The wireless device (12) of claim 1 wherein said processor (46) is configured to limit operability of a portion (58, 60) of the user interface (36) in response to an event generated responsive to a change in a call condition.

**3.** The wireless device (12) of claim 1 wherein the portion (58, 60) of the user interface (36) enables entry of user selection of a responsive action in response to the alert.

**4.** The wireless device (12) of claim 1 wherein the user interface (36) comprises a communication reject key (58) and wherein said processor is configured to disable operability of the communication reject key (58).

**5.** The wireless device (12) of claim 1 wherein said processor (46) is configured to limit operability of a portion (58, 60) of a user interface (36) for a selected period responsive to entry at the user interface (36) of originating call indicia.

**6.** The wireless device (12) of claim 1 wherein the selected period is of a length dependent upon prior input entry at the user interface (36), the prior input at the user interface being input by a user of the wireless device.

**7.** The wireless device (12) of claim 1 wherein the user interface (36) comprises a communication accept key (60) and wherein said processor (46) is configured to disable operability of the communication accept key.

**8.** A method (152) for operating a communication device (12) having a user interface (36), said method **characterized by**:
generating an event at the communication device (158); and
substantially concurrently, disabling (164) operability of a portion of the user interface for a selected period (172);
after expiration of the selected period (172), enabling operability of the portion of the user interface (176).

**9.** The method (152) of claim 8 wherein the event generated during said generating is generated in response to a wireless-device-triggered alert.

**10.** The method (152) of claim 8 wherein the user interface key comprises a communication reject key (58) and wherein said limiting operability comprises limiting operability of the communication reject key.

**11.** The method (152) of claim 8 wherein said generating an event further comprises generating an indication of use (166) of the communication device pursuant to an originating communication.

**12.** The method (152) of claim 8 wherein the user interface (36) comprises a communication accept key and wherein said limiting operability comprises limiting operability of the communication accept key.

**13.** The method (152) of claim 8 wherein the selected period is of a length dependent upon performance of an additional function at the communication device.
